# EUROPÄISCHE PATENTSCHRIFT

(11) **EP 3 649 520 B1**
(45) Veröffentlichungstag und Bekanntmachung des Hinweises auf die Patenterteilung: **08.09.2021**
(21) Anmeldenummer: 18729397.2
(22) Anmeldetag: 04.06.2018
(51) Int. Cl.: H04W 4/02, H04W 4/46, G01S 19/48, G01S 19/14, G01S 19/40, G08G 1/00, G08G 1/123, G05D 1/02, G01S 5/00, G01C 21/30

(54) **VERFAHREN ZUR LOKALISIERUNG EINES HÖHER AUTOMATISIERTEN FAHRZEUGS SOWIE ENTSPRECHENDE FAHRERASSISTENZSYSTEM UND COMPUTERPROGRAMM**
METHOD FOR LOCATING A MORE HIGHLY AUTOMATED VEHICLE, AND CORRESPONDING DRIVER ASSISTANCE SYSTEM AND COMPUTER PROGRAM
PROCÉDÉ DE LOCALISATION D'UN VÉHICULE HAUTEMENT AUTOMATISÉ, AINSI QUE SYSTÈME D'AIDE À LA CONDUITE CORRESPONDANT ET PROGRAMME INFORMATIQUE

(30) Priorität: 07.07.2017 DE 102017211605
(43) Veröffentlichungstag der Anmeldung: 13.05.2020
(73) Patentinhaber: Robert Bosch GmbH, 70442 Stuttgart (DE)
(72) Erfinder: HASBERG, Carsten, 74360 Ilsfeld-Auenstein (DE); RASP, Philipp, 72827 Wannweil (DE)
(86) Internationale Anmeldenummer: PCT/EP2018/064648
(87) Internationale Veröffentlichungsnummer: WO 2019/007607

(56) Entgegenhaltungen:
- US-A1- 2005 134 440

## Beschreibung

Die Erfindung betrifft ein Verfahren zur Lokalisierung eines höher automatisierten Fahrzeugs (HAF), insbesondere eines hochautomatisierten Fahrzeugs, in einer digitalen Karte und ein Fahrerassistenzsystem zur Steuerung eines höher automatisierten Fahrzeugs (HAF), insbesondere eines hochautomatisierten Fahrzeugs.

### Stand der Technik

Angesichts einer Zunahme des Automatisierungsgrades von Fahrzeugen werden immer komplexere Fahrerassistenzsysteme eingesetzt. Für solche Fahrerassistenzsysteme und Funktionen, wie z.B. dem hochautomatisierten Fahren oder dem vollautomatisierten Fahren, wird eine große Zahl von Sensoren im Fahrzeug benötigt, die eine exakte Erfassung des Fahrzeugumfelds ermöglichen.

Im Folgenden werden unter höher automatisiert all diejenigen Automatisierungsgrade verstanden, die im Sinne der Bundesanstalt für Straßenwesen (BASt) eine automatisierte Längs- und Querführung mit steigender Systemverantwortung entsprechen, z.B. das hoch- und vollautomatisierte Fahren.

Im Stand der Technik ist eine Vielzahl von Möglichkeiten offenbart, ein Verfahren zur Lokalisierung eines höher automatisierten Fahrzeugs (HAF), insbesondere eines hochautomatisierten Fahrzeugs, durchzuführen. So sind beispielsweise Lokalisierungsverfahren bekannt, die auf einer Kombination von GNSS genannten globalen Satellitennavigationssystemen, wie beispielsweise GPS, GLONASS oder Galileo, und Fahrdynamiksensoren, wie beispielsweise Drehratensensoren, Beschleunigungssensoren, Lenkradwinkelsensoren oder Raddrehzahlensensoren basieren. Ausschlaggebend für die Genauigkeit einer auf GNSS basierenden Fahrzeuglokalisierung ist bekanntermaßen die Qualität der GNSS-Auflösung, die jedoch örtlichen und zeitlichen Schwankungen unterliegt. Diese Genauigkeit kann durch Korrekturdienste verbessert werden.

US2005134440 beschreibt ein Fahrzeug, das mittels einem Laserstrahl eine Signatur der vorbeifahrenden Umgebung erhält. Wenn eine Übereinstimmung gefunden wird, kann der Abstand zu einem bestimmten Objekt bestimmt werden, indem die Position des Fahrzeugs genau auf der Straße platziert wird. Dies kann das Fahrzeug zu einer DGPS-Station zur Korrektur der GPS-Fehler machen.

Eine bekannte Methode verwendet dabei Referenzstationen auf der Erdoberfläche, deren Position hochgenau geodätisch vermessen wurde. Anhand aktueller Messungen der GNSS Signale an den Referenzstationen kann eine lokale, momentane GNSS-Ungenauigkeit bestimmt werden. Somit kann für jede Referenzstation ein aktueller, dort gültiger GNSS-Fehier angegeben werden. Um an jeder beliebigen Position eines Gebietes den GNSS-Fehler bestimmen zu können, werden die GNSS-Fehler zwischen den Referenzstationen interpoliert.

Werden die örtlich und zeitlich gültigen GNSS-Fehler nun höher automatisierten Fahrzeugen bei der Positionsbestimmung zur Verfügung gestellt, kann eine verbesserte Positionsbestimmung durch die Bereinigung der vom GNSS-Modul angegebenen Fahrzeugposition um den GNSS-Fehler erfolgen.

Obwohl durch dieses Verfahren befriedigende Ergebnisse hinsichtlich der Genauigkeit der Fahrzeuglokalisierung liefert, hat es doch einige Nachteile. Hierzu zählen unter anderem eine teilweise eingeschränkte Verfügbarkeit, da zur Übermittlung der GNSS-Fehler an die höher automatisierten Fahrzeuge eine Übertragung OTA (over-the-air) erforderlich ist, die nicht an jedem Ort garantiert werden kann, und hohe Kosten durch den Betrieb und die Einrichtung der Referenzstationen.

Ferner hat es sich als nachteilig herausgestellt, dass die verbesserte GNSS-Genauigkeit mit zunehmendem Abstand des Fahrzeugs von einer der Referenzstationen aufgrund von Interpolationsfehlern bei der Bestimmung des örtlich gültigen GNSS-Fehlers abnimmt

Es ist daher eine Aufgabe der vorliegenden Erfindung, ein verbessertes Verfahren zum Betreiben eines höher automatisierten Fahrzeugs (HAF), insbesondere eines hochautomatisierten Fahrzeugs und ein verbessertes Fahrerassistenzsystem zur Steuerung eines höher automatisierten Fahrzeugs (HAF), insbesondere eines hochautomatisierten Fahrzeugs bereitzustellen, mit dem die oben genannten Nachteile zumindest verbessert werden und das eine Alternative zu herkömmlichen GNSS Korrekturdiensten darstellt.

### Offenbarung der Erfindung

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zur Lokalisierung eines höher automatisierten Fahrzeugs (HAF), insbesondere eines hochautomatisierten Fahrzeugs, in einer digitalen Karte bereitgestellt, umfassend die folgenden Schritte:
S1 zur Verfügung stellen einer digitalen Karte, vorzugsweise einer hochgenauen digitalen Karte, in einem Fahrerassistenzsystem des HAF;
S2 zur Verfügung stellen zumindest einer hochgenau geodätisch vermessenen Referenzmessstelle, wobei Positionsdaten der Referenzmessstelle in der digitalen Karte hinterlegt sind;
S3 Bestimmung einer aktuellen Referenz-Fahrzeugposition unter Verwendung der Referenzmessstelle;
S4 Bestimmung einer aktuellen Satelliten-Fahrzeugposition unter Verwendung eines globalen Satellitennavigationssystems (GNSS); und
S5 Vergleich der Referenz-Fahrzeugposition mit der Satelliten-Fahrzeugposition und Ermittlung eines GNSS-Fehlers als Ergebnis des Vergleichs.

Geeignete Orte für die in Schritt S2 zur Verfügung gestellten Referenzmessstellen zeichnen sich durch sehr gute Abdeckung durch globale Satellitennavigationssysteme (GNSS) aus, was bedeutet, dass an diesen Orten möglichst keine Verdeckung des Satellitenempfangs sowie keine Multipath-Effekte herrschen sollten. Ferner sollten diese Orte eine ausreichend hohe Dichte an gute vermessbaren sowie identifizierbaren Referenzmessstellen bieten.

Entsprechend ist es von Vorteil, wenn als Referenzmessstellen beispielsweise Straßenmarkierungen, eine Bordsteinkante, ein Leitpfosten, Schutzplanken, Lichtsignalanlagen, und/oder Verkehrszeichen verwendet werden.

Grundsätzlich kann die in Schritt S3 erfolgte Bestimmung der Referenz-Fahrzeugposition in einer an sich bekannten Weise durch ein Lokalisierungsverfahren basierend auf Merkmalen, eine sogenannte Feature Lokalisierung erfolgen. Dabei ist es beispielsweise denkbar, dass ein oder mehrere Sensoren einen Richtungswinkel sowie einen Abstand des HAF zu der Referenzmessstelle messen, beispielsweise durch Radar-Abstandsmessung. Da die Position der Referenzmessstelle bekannt ist, kann eine Steuereinrichtung des HAF unter Verwendung dieser Sensordaten sowie anhand der Positionsdaten der Referenz-Messstelle die Referenz-Fahrzeugposition durch grundlegende geodätische Verfahren ermitteln.

Dabei ist denkbar, dass jede Referenzmessstelle aktiv eine Kennung, beispielsweise über Funk oder Radar, aussendet, die von einem in der Umgebung der Referenzmessstelle fahrenden HAF erkannt und identifiziert wird. Es ist ebenfalls denkbar, dass die Referenzmessstellen auf diese Weise auch ihre Position an das Fahrerassistenzsystem des HAF übermitteln, sodass diese nicht eigens in der digitalen Karte hinterlegt sein muss. Wann immer ein HAF in die Nähe einer derart ausgestatteten Referenzmessstelle kommt, wird sein Fahrerassistenzsystem durch das von der Referenzmessstelle ausgesendete Signal auf das Vorhandensein der Referenzmessstelle aufmerksam gemacht und mit den Positionsdaten der Referenzmessstelle versorgt. Ein Fahrerassistenzsystem kann in einer Ausführungsform der Erfindung zu diesem Zweck mit einer dem Signaltyp entsprechenden Empfängereinheit ausgestattet sein, die vorzugsweise in dem bereits genannten Sensor zur Erfassung der Referenzmessstelle integriert ist.

Erfindungsgemäße ist des Weiteren ein Schritt S7 vorgesehen. In diesem wird die aktuelle Satelliten-Fahrzeugposition und/oder die Referenz-Fahrzeugposition sowie der ermittelte GNSS-Fehler an einen Serverrechner übertragen. Anschließend erfolgt eine Verarbeitung des GNSS-Fehlers in einem übergeordneten GNSS-Fehlermodell und ein zur Verfügung stellen des GNSS-Fehlermodells für weitere höher automatisierte Fahrzeuge.

Vorzugsweise beinhaltet das erfindungsgemäße Verfahren einen zusätzlichen Schritt S6, in dem eine Bestimmung zumindest einer weiteren Satelliten-Fahrzeugposition unter Verwendung des globalen Satellitennavigationssystems (GNSS) durchgeführt wird, wobei die Positionsangabe des GNSS um den GNSS-Fehler bereinigt wird.

In einer weiteren Ausführungsform der Erfindung beinhaltet das Verfahren, dass der Schritt S7 des Weiteren umfasst, dass weitere höher automatisierte Fahrzeuge jeweils ermittelte GNSS-Fehler sowie aktuelle Satelliten-Fahrzeugpositionen und/oder Referenz-Fahrzeugpositionen an den Serverrechner übermitteln, wobei das GNSS-Fehlermodell unter Berücksichtigung einer Vielzahl, vorzugsweise aller übertragenen GNSS-Fehler erstellt wird.

Für das weitere Vorgehen ist es in einer Ausführungsform der Erfindung vorteilhafterweise vorgesehen, dass das GNSS-Fehlermodell auf Interpolation zwischen den jeweils übertragenen GNSS-Fehlern basiert.

Vorzugsweise sind für die Identifizierung der Referenzmessstelle durch das HAF geeignete Erkennungsmerkmale der Referenzmessstelle in der digitalen Karte hinterlegt sind.

Dabei es sich als Vorteil herausgestellt, dass die Referenzmessstelle mit einem Sender ausgestattet ist, wobei der Sender ein Signal, insbesondere ein Funk- oder Radarsignal, mit einer Kennung der Referenzmessstelle aussendet, wobei das Signal von dem in der Umgebung der Referenzmessstelle befindlichen HAF empfangen wird.

Bevorzugterweise umfasst das von dem Sender ausgesendete Signal auch die Positionsdaten der Referenzmessstelle.

Für das weitere Vorgehen ist es in einer Ausführungsform der Erfindung vorteilhafterweise vorgesehen, dass die Referenzmessstelle eine Straßenmarkierung, eine Bordsteinkante, ein Leitpfosten, eine Schutzplanke, eine Lichtsignalanlage, und/oder ein Verkehrszeichen ist.

Einen weiteren Gegenstand der Erfindung bildet ein Fahrerassistenzsystem zur Steuerung eines höher automatisierten Fahrzeugs (HAF), insbesondere eines hochautomatisierten Fahrzeugs, wobei das Fahrerassistenzsystem zumindest einen Sensor zur Erfassung einer Referenzmessstelle in der Umgebung des HAF, ein Speichermodul zur Speicherung einer digitalen Karte, vorzugsweise einer hochgenauen digitalen Karte, ein GNSS-Positionsmodul zur Bestimmung einer Satelliten-Fahrzeugposition des HAF und eine Steuervorrichtung umfasst. Das Speichermodul ist insbesondere ein in das HAF integriertes Speichermodul oder ein zentraler Server, wobei Positionsdaten der Referenz-Messstelle in der digitalen Karte hinterlegt sind. Ferner arbeitet das GNSS-Positionsmodul nach einem Verfahren der globalen Satellitennavigation (GNSS) und ist insbesondere ein GPS-Modul ist. Die Steuervorrichtung ist dazu eingerichtet, Daten mit dem Sensor, dem Speichermodul und dem Positionsmodul auszutauschen und die durch das Positionsmodul bestimmte Fahrzeugposition in der digitalen Karte zu lokalisieren. Erfindungsgemäß ist vorgesehen, dass die Steuervorrichtung dazu eingerichtet ist, anhand von seitens des Sensors gelieferten Sensordaten sowie anhand der Positionsdaten der Referenz-Messstelle eine Referenz-Fahrzeugposition zu ermitteln. Ferner wird die von dem GNSS-Positionsmodul ermittelte Satelliten-Fahrzeugposition mit der Referenz-Fahrzeugposition verglichen und ein GNSS-Fehler als Ergebnis des Vergleichs ermittelt. Das Fahrerassistenzsystem umfasst ferner ein Übertragungsmodul, wobei die Steuereinheit dazu eingerichtet ist, die aktuelle Satelliten-Fahrzeugposition und/oder die Referenz-Fahrzeugposition sowie den ermittelten GNSS-Fehlers an einen Serverrechner zu übertragen.

In einer besonders bevorzugten Ausführungsform ist die Steuereinheit dazu eingerichtet, bei der Bestimmung zumindest einer weiteren Satelliten-Fahrzeugposition unter Verwendung des GNSS-Positionsmoduls die von dem GNSS-Positionsmodul ermittelte Positionsangabe um den GNSS-Fehler zu bereinigen.

Bevorzugterweise ist die Steuereinheit dazu eingerichtet, einen ermittelten GNSS-Fehlers von einem Serverrechner zu empfangen und bei der Bestimmung einer GNSS-Fahrzeugposition zu berücksichtigen.

In einer bevorzugten Ausführungsform arbeitet das Übertragungsmodul nach einem Funk und/oder vehicle-to-infrastructure (V2I) Übertragungsverfahren.

In einer Ausführungsform der Erfindung ist der zumindest eine Sensor aus der Gruppe der folgenden Sensoren ausgewählt: Beschleunigungssensoren, Kamerasensoren, Radarsensoren, Lidarsensoren.

Ferner bildet auch Computerprogramm, umfassend Programmcode zur Durchführung des Verfahrens nach einem der Ansprüche 1 bis 7, wenn das Computerprogramm auf einem Computer ausgeführt wird, einen Gegenstand der Erfindung.

Obwohl die vorliegende Erfindung im Folgenden hauptsächlich in Zusammenhang mit Personenkraftwagen beschrieben wird, ist sie darauf nicht beschränkt, sondern kann mit jeder Art von Fahrzeug Lastkraftfahrzeuge (LKW) und/oder Personenkraftwagen (PKW) genutzt werden.

Weitere Merkmale, Anwendungsmöglichkeiten und Vorteile der Erfindung ergeben sich aus der nachfolgenden Beschreibung der Ausführungsbeispiele der Erfindung, welche in der Figur dargestellt sind. Dabei ist zu beachten, dass die dargestellten Merkmale nur einen beschreibenden Charakter haben und nicht dazu gedacht sind, die Erfindung in irgendeiner Form einzuschränken.

### Zeichnungen

Die Erfindung wird im Folgenden anhand eines bevorzugten Ausführungsbeispiels näher erläutert, wobei für gleiche Merkmale gleiche Bezugszeichen verwendet werden. Die Zeichnung ist schematisch und zeigt:

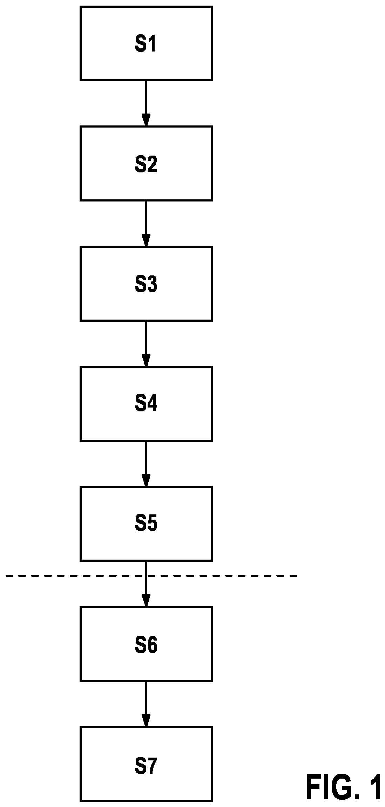

Fig. 1 ein Ablaufschema einer ersten Ausführungsform des erfindungsgemäßen Verfahrens.

In Schritt S1 der Figur 1 wird eine digitale Karte, vorzugsweise eine hochgenaue digitale Karte, in einem Fahrerassistenzsystem eines HAF zur Verfügung gestellt, was vorrichtungsseitig in einem Speichermodul zur Speicherung der digitalen Karte geschehen kann, wobei das Speichermodul insbesondere ein in das HAF integriertes Speichermodul oder ein zentraler Server ist.

In Schritt S2 wird zumindest eine, vorzugsweise jedoch mehrere hochgenau geodätisch vermessene Referenzmessstellen zur Verfügung gestellt, wobei die Positionsdaten der Referenzmessstellen als Geokoordinaten in der digitalen Karte hinterlegt sind.

Geeignete Orte für die Anordnung von Referenzmessstellen zeichnen sich durch sehr gute Abdeckung durch globale Satellitennavigationssysteme (GNSS) aus, was bedeutet, dass an diesen Orten möglichst keine Verdeckung des Satellitenempfangs sowie keine Multipath-Effekte herrschen sollten. Ferner sollten diese Orte eine ausreichend hohe Dichte an gute vermessbaren sowie identifizierbaren Referenzmessstellen bieten.

Die Referenzmessstellen selbst können dabei beispielsweise Straßenmarkierungen, eine Bordsteinkante, ein Leitpfosten, Schutzplanken, Lichtsignalanlagen, und/oder Verkehrszeichen sein.

Schritt S3 umfasst die Bestimmung einer aktuellen Referenz-Fahrzeugposition unter Verwendung einer Referenzmessstelle. Vorrichtungsseitig umfasst ein erfindungsgemäßes Fahrerassistenzsystem zu diesem Zwecke zumindest einen Sensor, der dazu geeignet ist, die Referenzmessstelle in der Umgebung des HAF zu erfassen. In an sich bekannter Weise kann hierbei ein Sensor aus der Gruppe der Kamerasensoren, Radarsensoren, oder Lidarsensoren zum Einsatz kommen. Die Bestimmung der Referenz-Fahrzeugposition kann dabei in ebenfalls an sich bekannter Weise durch ein Lokalisierungsverfahren basierend auf Merkmalen, eine sogenannte Feature Lokalisierung erfolgen. Dabei ist es beispielsweise denkbar, dass ein oder mehrere Sensoren einen Richtungswinkel sowie einen Abstand des HAF zu der Referenzmessstelle messen, beispielsweise durch Radar-Abstandsmessung. Da die Position der Referenzmessstelle bekannt ist, kann eine Steuereinrichtung des HAF unter Verwendung dieser Sensordaten sowie anhand der Positionsdaten der Referenz-Messstelle die Referenz-Fahrzeugposition durch grundlegende geodätische Verfahren ermitteln.

In diesem Zusammenhang ist es vorteilhaft, wenn für die Identifizierung der Referenzmessstelle durch das HAF geeignete Erkennungsmerkmale der Referenzmessstelle in der digitalen Karte hinterlegt sind.

Ebenfalls und alternativ ist es denkbar, dass jede Referenzmessstelle aktiv eine Kennung, beispielsweise über Funk oder Radar, aussendet, die von einem in der Umgebung der Referenzmessstelle fahrenden HAF erkannt und identifiziert wird. Es ist ebenfalls denkbar, dass die Referenzmessstellen auf diese Weise auch ihre Position an das Fahrerassistenzsystem des HAF übermitteln, sodass diese nicht eigens in der digitalen Karte hinterlegt sein muss. Wann immer ein HAF in die Nähe einer derart ausgestatteten Referenzmessstelle kommt, wird sein Fahrerassistenzsystem durch das von der Referenzmessstelle ausgesendete Signal auf das Vorhandensein der Referenzmessstelle aufmerksam gemacht und mit den Positionsdaten der Referenzmessstelle versorgt. Ein Fahrerassistenzsystem kann in einer Ausführungsform der Erfindung zu diesem Zweck mit einer dem Signaltyp entsprechenden Empfängereinheit ausgestattet sein, die vorzugsweise in dem bereits genannten Sensor zur Erfassung der Referenzmessstelle integriert ist.

In Schritt S4 erfolgt die Bestimmung einer aktuellen Satelliten-Fahrzeugposition unter Verwendung eines globalen Satellitennavigationssystems (GNSS). Bei dem GNSS kann es sich beispielsweise um ein auf Navstar GPS, Glonass, Galileo, und/oder Beidou basierenden Navigationssystem handeln. Das erfindungsgemä-ße Fahrerassistenzsystem ist zu diesem Zweck mit einem GNSS-Positionsmodul ausgestattet.

Da die GNSS-Auflösung, wie bereits einführend erwähnt, örtlichen und zeitlichen Schwankungen unterliegt, wird es im Allgemeinen eine Abweichung zwischen der Satelliten-Fahrzeugposition und der Referenz-Fahrzeugposition geben.

In Schritt S5 wird daher ein Vergleich der Referenz-Fahrzeugposition mit der Satelliten-Fahrzeugposition durchgeführt und ein GNSS-Fehlers als Ergebnis des Vergleichs ermittelt. In dem erfindungsgemäßen Fahrerassistenzsystem werden diese Schritte durch die Steuervorrichtung durchgeführt, die zu diesem Zweck unter anderem dazu eingerichtet ist, Daten mit dem Speichermodul, und dem Positionsmodul und dem Sensor auszutauschen.

In einer vorteilhaften Ausgestaltung der Erfindung umfasst das Verfahren den Schritt der Bestimmung zumindest einer weiteren Satelliten-Fahrzeugposition unter Verwendung des globalen Satellitennavigationssystems (GNSS), wobei die Positionsangabe des Satellitennavigationssystems (GNSS) um den GNSS-Fehler bereinigt wird (S6). Vorzugsweise wird bei der folgenden Steuerung des HAF durch das erfindungsgemäße Fahrerassistenzsystem die Positionsangabe des GNSS-Positionsmoduls solange um den GNSS-Fehler bereinigt, bis eine neue Referenzmessstelle angetroffen wird, an welcher dann die Schritte S3 - S5 des erfindungsgemäßen Verfahrens erneut durchgeführt werden. Das Verfahren umfasst einen Schritt S7, in dem eine Übertragung der aktuellen Satelliten-Fahrzeugposition und/oder der Referenz-Fahrzeugposition sowie des ermittelten GNSS-Fehlers an einen Serverrechner durchgeführt wird. Durch den Serverrechner kann eine Verarbeitung des GNSS-Fehlers in einem übergeordneten GNSS-Fehlermodell geleistet werden, wobei das GNSS-Fehlermodell vorteilhafterweise weiteren höher automatisierten Fahrzeugen zur Verfügung gestellt wird. Das erfindungsgemäße Fahrerassistenzsystem kann zu diesem Zwecke ein Übertragungsmodul umfassen, wobei die Steuereinheit des Fahrerassistenzsystems dazu eingerichtet ist, die aktuelle Satelliten-Fahrzeugposition und/oder die Referenz-Fahrzeugposition sowie den ermittelten GNSS-Fehlers an den Serverrechner zu übertragen. Umgekehrt sind das Übertragungsmodul sowie die Steuereinrichtung auch dazu eingerichtet, die entsprechenden Informationen zu den GNSS-Fehlern vom Server bzw. von anderen Fahrzeugen, die sich in der Nähe des HAF befinden, zu empfangen. Bei der Übertragung zwischen zwei Fahrzeugen kann es sich beispielsweise um eine vehicle-to-vehicle-Übertragung (v2v) handeln.

Unter Fehlermodell ist hier eine in einem bestimmten Gebiet gültige Angabe zu räumlich und/oder zeitlich variierenden GNSS-Fehlern zu verstehen, durch deren Bereinigung eine höhere Genauigkeit der GNSS-basierten Fahrzeuglokalisierung möglich ist.

Besonders vorteilhaft ist es dabei, wenn weitere höher automatisierte Fahrzeuge ihrerseits jeweils ermittelte GNSS-Fehler sowie aktuelle Satelliten-Fahrzeugpositionen und/oder Referenz-Fahrzeugpositionen an den Serverrechner übermitteln, und das GNSS-Fehlermodell unter Berücksichtigung einer Vielzahl, vorzugsweise aller übertragenen GNSS-Fehler erstellt wird. Auf diese Weise kann ein dichtes Netz an Informationen zu den örtlich variierenden GNSS-Fehlern erhalten werden, was über eine entsprechende Interpolation zwischen den jeweils übertragenen GNSS-Fehlern nochmals verbessert werden kann.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Verfahren zur Lokalisierung eines höher automatisierten Fahrzeugs, HAF, insbesondere eines hochautomatisierten Fahrzeugs, in einer digitalen Karte, umfassend die Schritte:
S1 zur Verfügung stellen einer digitalen Karte, vorzugsweise einer hochgenauen digitalen Karte, in einem Fahrerassistenzsystem des HAF;
S2 zur Verfügung stellen zumindest einer hochgenau geodätisch vermessenen Referenzmessstelle, wobei Positionsdaten der Referenzmessstelle in der digitalen Karte hinterlegt sind;
S3 Bestimmung einer aktuellen Referenz-Fahrzeugposition unter Verwendung der Referenzmessstelle;
S4 Bestimmung einer aktuellen Satelliten-Fahrzeugposition unter Verwendung eines globalen Satellitennavigationssystems, GNSS,
S5 Vergleich der Referenz-Fahrzeugposition mit der Satelliten-Fahrzeugposition und Ermittlung eines GNSS-Fehlers als Ergebnis des Vergleichs;
wobei das Verfahren durch den folgenden Schritt gekennzeichnet ist:
S7 Übertragung der aktuellen Satelliten-Fahrzeugposition und/oder der Referenz-Fahrzeugposition sowie des ermittelten GNSS-Fehlers an einen Serverrechner, sowie Verarbeitung des GNSS-Fehlers in einem übergeordneten GNSS-Fehlermodell und zur Verfügung stellen des GNSS-Fehlermodells für weitere höher automatisierte Fahrzeuge.

2. Verfahren nach Anspruch 1, wobei das Verfahren des Weiteren den folgenden Schritt umfasst:
S6 Bestimmung zumindest einer weiteren Satelliten-Fahrzeugposition unter Verwendung des globalen Satellitennavigationssystems (GNSS), wobei die Positionsangabe des GNSS um den GNSS-Fehler bereinigt wird.

3. Verfahren nach einem der Ansprüche 1 oder 2, wobei der Schritt S7 des Weiteren umfasst, dass weitere höher automatisierte Fahrzeuge jeweils ermittelte GNSS-Fehler sowie aktuelle Satelliten-Fahrzeugpositionen und/oder Referenz-Fahrzeugpositionen an den Serverrechner übermitteln, wobei das GNSS-Fehlermodell unter Berücksichtigung einer Vielzahl, vorzugsweise aller übertragenen GNSS-Fehler erstellt wird.

4. Verfahren nach Anspruch 3, wobei das GNSS-Fehlermodell auf Interpolation zwischen den jeweils übertragenen GNSS-Fehlern basiert.

5. Verfahren nach einem der vorstehenden Ansprüche, wobei für die Identifizierung der Referenzmessstelle durch das HAF geeignete Erkennungsmerkmale der Referenzmessstelle in der digitalen Karte hinterlegt sind.

6. Verfahren nach einem der vorstehenden Ansprüche, wobei die Referenzmessstelle mit einem Sender ausgestattet ist, wobei der Sender ein Signal, insbesondere ein Funk- oder Radarsignal, mit einer Kennung der Referenzmessstelle aussendet, wobei das Signal von dem in der Umgebung der Referenzmessstelle befindlichen HAF empfangen wird.

7. Verfahren nach Anspruch 6, wobei das von dem Sender ausgesendete Signal auch die Positionsdaten der Referenzmesssteile umfasst.

8. Verfahren nach einem der vorstehenden Ansprüche, wobei die Referenzmessstelle eine Straßenmarkierung, eine Bordsteinkante, ein Leitpfosten, eine Schutzplanke, eine Lichtsignalanlage, und/oder ein Verkehrszeichen ist.

9. Fahrerassistenzsystem zur Steuerung eines höher automatisierten Fahrzeugs, HAF, insbesondere eines hochautomatisierten Fahrzeugs, umfassend
• zumindest einen Sensor zur Erfassung einer Referenzmessstelle in der Umgebung des HAF;
• ein Speichermodul zur Speicherung einer digitalen Karte, vorzugsweise einer hochgenauen digitalen Karte, wobei das Speichermodul insbesondere ein in das HAF integriertes Speichermodul oder ein zentraler Server ist, und wobei Positionsdaten der Referenz-Messstelle in der digitalen Karte hinterlegt sind;
• ein GNSS-Positionsmodul zur Bestimmung einer Satelliten-Fahrzeugposition des HAF, wobei das GNSS-Positionsmodul nach einem Verfahren der globalen Satellitennavigation, GNSS, arbeitet und insbesondere ein GPS-Modul ist;
• eine Steuervorrichtung, die dazu eingerichtet ist, Daten mit dem Sensor, dem Speichermodul und dem Positionsmodul auszutauschen und die durch das Positionsmodul bestimmte Fahrzeugposition in der digitalen Karte zu lokalisieren,
**dadurch gekennzeichnet, dass** die Steuervorrichtung dazu eingerichtet ist,
- anhand von seitens des Sensors gelieferten Sensordaten sowie anhand der Positionsdaten der Referenz-Messstelle eine Referenz-Fahrzeugposition zu ermitteln;
- die von dem GNSS-Positionsmodul ermittelte Satelliten-Fahrzeugposition mit der Referenz-Fahrzeugposition zu vergleichen; und
- einen GNSS-Fehler als Ergebnis des Vergleichs zu ermitteln; und wobei das Fahrerassistenzsystem ferner ein Übertragungsmodul umfasst, und dass die Steuereinheit dazu eingerichtet ist, die aktuelle Satelliten-Fahrzeugposition und/oder die Referenz-Fahrzeugposition sowie den ermittelten GNSS-Fehlers an einen Serverrechner zu übertragen.

10. Fahrerassistenzsystem nach Anspruch 9, wobei die Steuereinheit dazu eingerichtet ist, bei der Bestimmung zumindest einer weiteren Satelliten-Fahrzeugposition unter Verwendung des GNSS-Positionsmoduls die von dem GNSS-Positionsmodul ermittelte Positionsangabe um den GNSS-Fehler zu bereinigen.

11. Fahrerassistenzsystem nach einem der Ansprüche 9 oder 10, wobei die Steuereinheit dazu eingerichtet ist, einen ermittelten GNSS-Fehlers von einem Serverrechner zu empfangen und bei der Bestimmung einer GNSS-Fahrzeugposition zu berücksichtigen.

12. Fahrerassistenzsystem nach einem der Ansprüche 9 bis 11, wobei das Übertragungsmodul nach einem der folgenden Übertragungsverfahren arbeitet: Funk, vehicle-to-infrastructure (V2I).

13. Fahrerassistenzsystem nach einem der Ansprüche 9-12, wobei der zumindest eine Sensor aus der Gruppe der folgenden Sensoren ausgewählt ist: Kamerasensoren, Radarsensoren, Lidarsensoren.

14. Computerprogramm, umfassend Programmcode zur Durchführung des Verfahrens nach einem der Ansprüche 1 bis 8, wenn das Computerprogramm auf einem Computer ausgeführt wird.

## Claims

1. Method for localizing a more highly automated vehicle, HAV, in particular a highly automated vehicle, in a digital map, comprising the following steps:
S1 providing a digital map, preferably a highly accurate digital map, in a driver assistance system of the HAV;
S2 providing at least one highly accurately geodetically measured reference measurement point,
wherein position data of the reference measurement point are stored in the digital map;
S3 determining a current reference vehicle position by using the reference measurement point;
S4 determining a current satellite vehicle position by using a global navigation satellite system, GNSS;
S5 comparing the reference vehicle position with the satellite vehicle position and ascertaining a GNSS error as a result of the comparison;
wherein the method is **characterized by** the following step:
S7 transmitting the current satellite vehicle position and/or the reference vehicle position and the ascertained GNSS error to a server computer and processing the GNSS error in a superordinate GNSS error model and providing the GNSS error model for other more highly automated vehicles.

2. Method according to Claim 1, wherein the method further comprises the following step:
S6 determining at least one other satellite vehicle position by using the global navigation satellite system (GNSS), wherein the position information from the GNSS is corrected for the GNSS error.

3. Method according to either of Claims 1 and 2, wherein step S7 further comprises that other more highly automated vehicles transmit respectively ascertained GNSS errors and also current satellite vehicle positions and/or reference vehicle positions to the server computer, wherein the GNSS error model is created taking into account many, preferably all, of the transmitted GNSS errors.

4. Method according to Claim 3, wherein the GNSS error model is based on interpolation between the respectively transmitted GNSS errors.

5. Method according to one of the preceding claims, wherein identifying features of the reference measurement point suitable for the identification of the reference measurement point by the HAV are stored in the digital map.

6. Method according to one of the preceding claims, wherein the reference measurement point is provided with a transmitter, wherein the transmitter transmits a signal, in particular a radio or radar signal, with an identifier of the reference measurement point, wherein the signal is received by the HAV located in the vicinity of the reference measurement point.

7. Method according to Claim 6, wherein the signal transmitted by the transmitter also comprises the position data of the reference measurement point.

8. Method according to one of the preceding claims, wherein the reference measurement point is a road marking, a kerb, a marker post, a guard rail, traffic lights and/or a road sign.

9. Driver assistance system for controlling a more highly automated vehicle, HAV, in particular a highly automated vehicle, comprising
• at least one sensor for detecting a reference measurement point in the vicinity of the HAV;
• a memory module for storing a digital map, preferably a highly accurate digital map, wherein the memory module is in particular a memory module integrated in the HAV or a central server, and wherein position data of the reference measurement point are stored in the digital map;
• a GNSS position module for determining a satellite vehicle position of the HAV, wherein the GNSS position module operates in accordance with a method for global satellite navigation, GNSS, and is in particular a GPS module;
• a control device, which is designed to exchange data with the sensor, the memory module and the position module, and to localize the vehicle position determined by the position module in the digital map,
**characterized in that** the control device is designed
- to ascertain a reference vehicle position by means of sensor data supplied by the sensor and by means of the position data of the reference measurement point;
- to compare the satellite vehicle position ascertained by the GNSS position module with the reference vehicle position; and
- to ascertain a GNSS error as a result of the comparison; and wherein the driver assistance system further comprises a transmission module, and **in that** the control unit is designed to transmit the current satellite vehicle position and/or the reference vehicle position and also the ascertained GNSS error to a server computer.

10. Driver assistance system according to Claim 9, wherein the control unit is designed to correct the position information ascertained by the GNSS position module for the GNSS error when determining at least one other satellite vehicle position by using the GNSS position module.

11. Driver assistance system according to either of Claims 9 and 10, wherein the control unit is designed to receive an ascertained GNSS error from a server computer and to take it into account when determining a GNSS vehicle position.

12. Driver assistance system according to one of Claims 9 to 11, wherein the transmission module operates in accordance with one of the following transmission methods: radio, vehicle-to-infrastructure (V2I).

13. Driver assistance system according to one of Claims 9-12, wherein the at least one sensor is selected from the group comprising the following sensors: camera sensors, radar sensors, lidar sensors.

14. Computer program, comprising program code for carrying out the method according to one of Claims 1 to 8 when the computer program is executed on a computer.

## Revendications

1. Procédé de localisation d'un véhicule très automatisé, HAF, en particulier d'un véhicule hautement automatisé, sur une carte numérique, comprenant les étapes consistant à :
S1 fournir une carte numérique, de préférence une carte numérique très précise, dans un système d'assistance au conducteur du HAF ;
S2 fournir au moins un point de mesure de référence à mesure géodésique très précise, des données de position du point de mesure de référence étant enregistrées sur la carte numérique ;
S3 déterminer une position de véhicule de référence actuelle en utilisant le point de mesure de référence ;
S4 déterminer une position de véhicule actuelle obtenue par satellite en utilisant un système global de navigation par satellite, GNSS,
S5 comparer la position de véhicule de référence avec la position de véhicule obtenue par satellite et déterminer une erreur GNSS comme résultat de la comparaison ;
le procédé étant **caractérisé par** l'étape suivante consistant à :
S7 transmettre la position de véhicule actuelle obtenue par satellite et/ou la position de véhicule de référence ainsi que l'erreur GNSS établie à un ordinateur serveur, et traiter l'erreur GNSS dans un modèle d'erreur GNSS de niveau supérieur, et fournir le modèle d'erreur GNSS pour d'autres véhicules très automatisés.

2. Procédé selon la revendication 1, le procédé comprenant en outre l'étape suivante consistant à :
S6 déterminer au moins une autre position de véhicule obtenue par satellite en utilisant le système global de navigation par satellite (GNSS), l'erreur GNSS étant éliminée de l'indication de position du GNSS.

3. Procédé selon l'une quelconque des revendications 1 ou 2, l'étape S7 comprenant en outre le fait que d'autres véhicules très automatisés transmettent à l'ordinateur serveur des erreurs GNSS respectivement établies ainsi que des positions de véhicule actuelles obtenues par satellite et/ou des positions de véhicule de référence, le modèle d'erreur GNSS étant créé en tenant compte d'une pluralité, de préférence de la totalité des erreurs GNSS transmises.

4. Procédé selon la revendication 3, dans lequel le modèle d'erreur GNSS est basé sur l'interpolation entre les erreurs GNSS respectivement transmises.

5. Procédé selon l'une quelconque des revendications précédentes, dans lequel le HAF enregistre sur la carte numérique des repères adaptés du point de mesure de référence afin d'identifier le point de mesure de référence.

6. Procédé selon l'une quelconque des revendications précédentes, dans lequel le point de mesure de référence est équipé d'un émetteur, l'émetteur émettant un signal, en particulier un signal radio ou radar, avec un identifiant du point de mesure de référence, le signal étant reçu par le HAF se trouvant dans l'environnement du point de mesure de référence.

7. Procédé selon la revendication 6, dans lequel le signal émis par l'émetteur comprend aussi les données de position du point de mesure de référence.

8. Procédé selon l'une quelconque des revendications précédentes, dans lequel le point de mesure de référence est un marquage au sol, un bord de trottoir, un délinéateur, une glissière de sécurité, des feux de signalisation et/ou un panneau routier.

9. Système d'assistance au conducteur pour commander un véhicule très automatisé, HAF, en particulier un véhicule hautement automatisé, comprenant
• au moins un capteur pour détecter un point de mesure de référence dans l'environnement du HAF ;
• un module de stockage pour stocker une carte numérique, de préférence une carte numérique très précise, le module de stockage étant en particulier un module de stockage intégré dans le HAF ou un serveur central, et dans lequel les données de position du point de mesure de référence sont enregistrées sur la carte numérique ;
• un module de positionnement par GNSS pour déterminer une position de véhicule obtenue par satellite du HAF, le module de positionnement par GNSS fonctionnant selon un procédé de la navigation par satellite globale, GNSS, et étant en particulier un module GPS ;
• un dispositif de commande qui est aménagé pour échanger des données avec le capteur, le module de stockage et le module de positionnement, et pour localiser sur la carte numérique la position de véhicule déterminée par le module de positionnement,
**caractérisé en ce que** le dispositif de commande est aménagé pour
- établir une position de véhicule de référence à l'aide de données de capteur fournies par le capteur ainsi qu'à l'aide des données de position du point de mesure de référence ;
- comparer la position de véhicule obtenue par satellite établie par le module de positionnement par GNSS avec la position de véhicule de référence ; et
- établir une erreur GNSS comme résultat de la comparaison ; et dans lequel
le système d'assistance au conducteur comprend en outre un module de transmission, et
**en ce que** l'unité de commande est aménagée pour transmettre à un ordinateur serveur la position de véhicule actuelle obtenue par satellite et/ou la position de véhicule de référence ainsi que l'erreur GNSS établie.

10. Système d'assistance au conducteur selon la revendication 9, dans lequel, lors de la détermination d'au moins une autre position de véhicule obtenue par satellite en utilisant le module de positionnement par GNSS, l'unité de commande est aménagée pour éliminer l'erreur GNSS de l'indication de position établie par le module de positionnement par GNSS.

11. Système d'assistance au conducteur selon l'une quelconque des revendications 9 ou 10, dans lequel l'unité de commande est aménagée pour recevoir d'un ordinateur serveur une erreur GNSS établie et pour en tenir compte lors de la détermination d'une position de véhicule obtenue par GNSS.

12. Système d'assistance au conducteur selon l'une quelconque des revendications 9 à 11, dans lequel le module de transmission fonctionne selon l'un des procédés de transmission suivants : radio, véhicule à infrastructure (V2I).

13. Système d'assistance au conducteur selon l'une quelconque des revendications 9 à 12, dans lequel ledit au moins un capteur est sélectionné parmi le groupe des capteurs suivants : les capteurs à caméra, les capteurs radar, les capteurs lidar.

14. Programme informatique, comprenant du code programme pour effectuer le procédé selon l'une quelconque des revendications 1 à 8 si le programme informatique est exécuté sur un ordinateur.
